# EUROPEAN PATENT SPECIFICATION

(11) **EP 1 628 895 B1**
(45) Date of publication and mention of the grant of the patent: **29.08.2007**
(21) Application number: 04732857.0
(22) Date of filing: 13.05.2004
(51) Int. Cl.: B65G 25/06

(54) **RECIPROCATING CONVEYOR FLOOR**
HIN- UND HERGEHENDER FLURFÖRDERER
PLANCHER DE TRANSPORTEUR

(30) Priority: 02.06.2003 NL 1023582
(43) Date of publication of application: 01.03.2006
(73) Proprietor: De Roo, Bert Ronald, 7826 CN Emmen (NL)
(72) Inventor: De Roo, Bert Ronald, 7826 CN Emmen (NL)
(74) Representative: Houben, Christiaan Hein Willem Frans
(86) International application number: PCT/NL2004/000324
(87) International publication number: WO 2004/106197

(56) References cited:
- EP-A- 0 629 567
- EP-A- 0 751 303
- EP-A- 0 934 892
- NL-A- 9 200 103
- US-A- 4 962 848
- US-B1- 6 513 648

## Description

The invention relates to a conveyor floor in accordance with the preamble of claim 1.

A conveyor floor of this type is known. In the known conveyor floor, there are detection means for detecting the end of the travel of the pistons during the sliding of the floor parts. These may be mechanical or electronic detection means. The switching valve is actuated on the basis of a detection signal emitted by the detection means, so that the flow of liquid in the system is reversed and the floor parts slide in the other direction.

The known detection means include moving or electronic parts which may become damaged or misaligned, for example as a result of mechanical shocks and vibrations which may occur while the floor is in use. Consequently, the known control system is susceptible to faults. Furthermore, the control system may become misaligned through improper handling if detection means are fitted incorrectly or are connected incorrectly to the valves.

It is an object of the invention to provide an improved conveyor floor, in particular with an improved operational reliability.

This object is achieved by a conveyor floor according to the preamble of claim 1, characterized in that the switching valve is a pressure-controlled switching valve which switches from the first position to the second position or from the second position to the first position when the flow of hydraulic fluid in the control system is zero.

The use of a pressure-controlled switching valve which switches over automatically when the flow of fluid is zero, i.e. when the piston rods of both cylinders are fully extended or retracted, means that limit detection of the actuators is no longer required, making the conveyor floor more operationally reliable. Furthermore, components are saved compared to the known conveyor floor, and this is reflected in the materials and assembly costs.

The invention also relates to a conveyor floor according to claim 2.

The invention will be explained in more detail with reference to the drawing, in which:
- Fig. 1: diagrammatically depicts an at-rest state of a hydraulic control system of one embodiment of a conveyor floor according to the invention,
- Fig. 2: shows the hydraulic control system from Fig. 1 in a state during unloading,
- Fig. 3: shows the hydraulic control system from Fig. 1 in a state during loading,
- Fig. 4: shows an alternative embodiment of a hydraulic cylinder for the control system shown in Figs. 1-3,
- Fig. 5: shows a conveyor floor according to the invention, and
- Fig. 6: diagrammatically depicts an at-rest state of a hydraulic control system of another embodiment of a conveyor floor according to the invention.

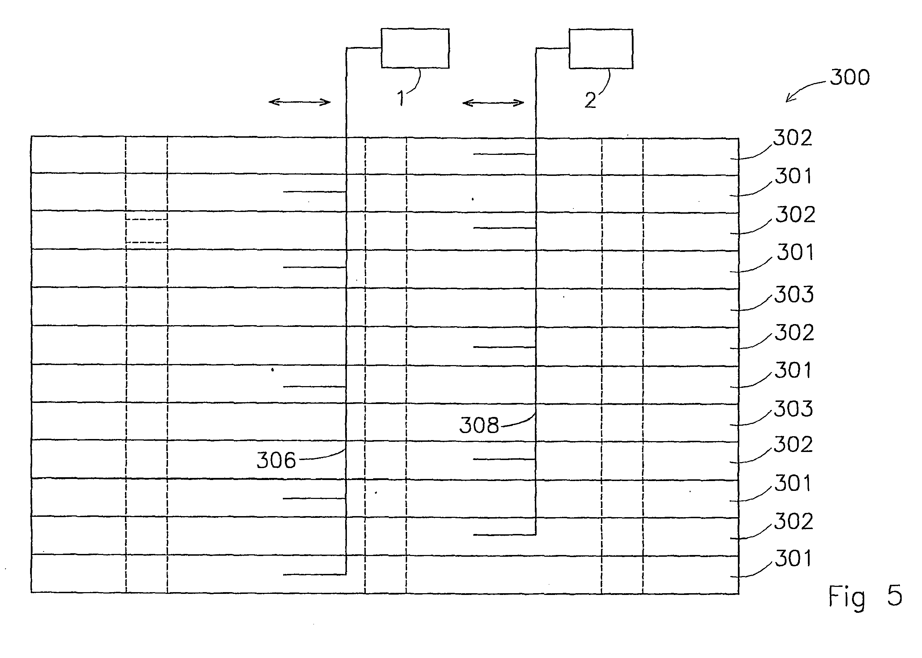

Fig. 5 diagrammatically depicts a conveyor floor 300 according to the invention. The conveyor floor 300 comprises at least first and second floor parts 301, 302 which are positioned next to one another and can slide to and fro in the longitudinal direction. Furthermore, the conveyor floor 300 shown by way of example also comprises a few stationary floor parts 303. The first floor parts 301 are coupled to a first hydraulic cylinder 1 by means of a coupling member 306. The second floor parts 302 are coupled to a second hydraulic cylinder 2 by means of a coupling member 308.

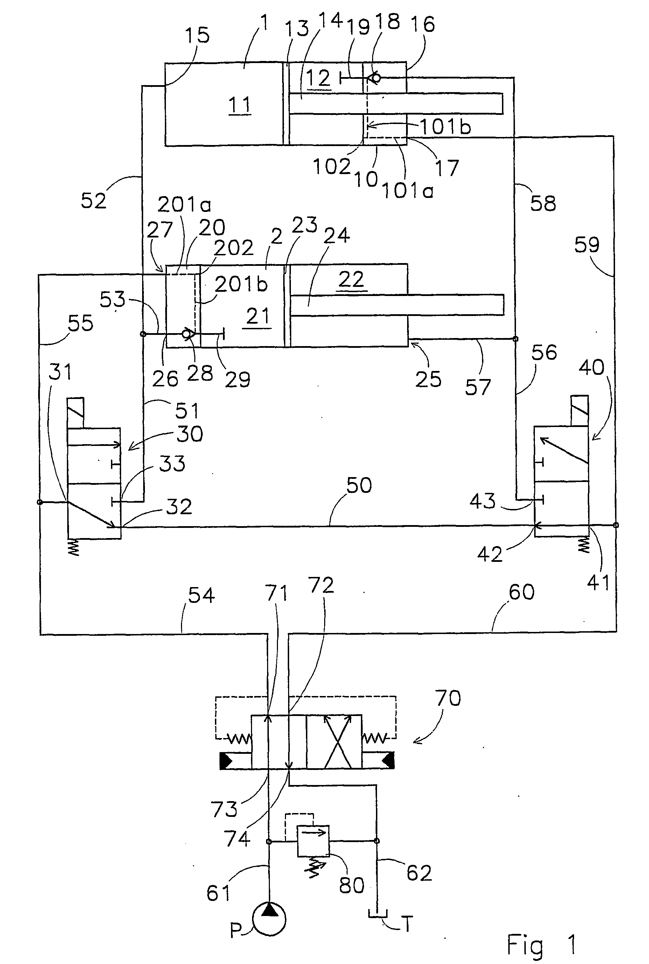

Fig. 1 illustrates a hydraulic control system for controlling floor parts of a conveyor floor. The control system comprises a pump P, a reservoir T, the first hydraulic cylinder 1 and the second hydraulic cylinder 2.

The first hydraulic cylinder 1 has a first working chamber 11 and a second working chamber 12, which are separated by a piston 13. The piston 13 is coupled to one or more first floor parts 301 of the conveyor floor by means of the piston rod 14 and the coupling member 306 (cf. Fig. 5). The second hydraulic cylinder 2 has a first working chamber 21 and a second working chamber 22, which are separated by a piston 23. The piston 23 is coupled to one or more second floor parts 302 of the conveyor floor by means of the piston rod 24 and the coupling member 308 (cf. Fig. 5).

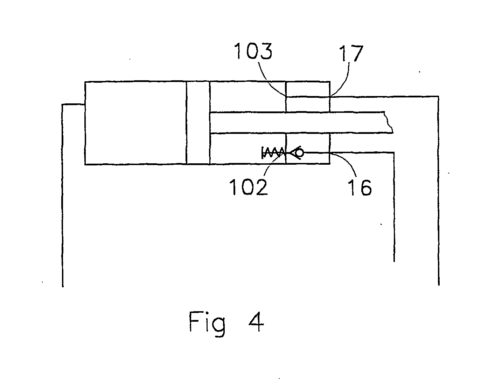

The first working chamber 11 of the first cylinder 1 has a connection port 15. The second working chamber 12 of the first cylinder 1 has two connection ports 16 and 17 arranged on cylinder head 10. The connection port 17 is in open communication with the internal port 102 in the second working chamber 12 via an internal line 101 (indicated by a dashed line) in the cylinder head 10. The connection port 16 is connected to the internal port 102 in the second working chamber 12 via a mechanically actuable nonreturn valve 18, which is arranged in the cylinder head 10, and internal lines 101b and 101a. The mechanically actuable nonreturn valve 18 can be opened by the piston 13, in the vicinity of the end of the piston stroke, pressing against an actuating member 19 of the nonreturn valve 18. When the nonreturn valve 18 has been opened by the piston 13, hydraulic fluid can flow from the port 16 to the port 17 via the internal lines 101a and 101b. The hydraulic fluid can always flow in the opposite direction of flow from the port 17 to the port 16 via the nonreturn valve 18, provided that there is a pressure difference across the valve. In another possible embodiment of the cylinder, which is shown in Fig. 4, the cylinder head 10 is provided with two internal ports 102 and 103, the connection ports 16, 17 each being connected to a separate internal port (cf. Fig. 4). In this possible embodiment, the hydraulic fluid flows via the second working chamber 12 from the port 16 to the port 17.

The first working chamber 21 of the second cylinder 2 has two connection ports 26 and 27, which are arranged on cylinder head 20. The connection port 27 is in open communication with the internal port 202 in the first working chamber 21 via an internal line 201a (indicated by means of a dashed line) in the cylinder head 20. The connection port 26 is connected to the internal port 202 in the first working chamber 21 via a mechanically actuable nonreturn valve 28, which is arranged in the cylinder head 20, and internal lines 201a and 201b. The mechanically actuable nonreturn valve 28 can be opened as a result of the piston 23, in the vicinity of the end of the piston stroke, pressing against an actuating member 29 of the nonreturn valve 28. When the nonreturn valve 28 has been opened by the piston 23, hydraulic fluid can flow from the port 26 to the port 27 via the internal lines 201b and 201a. The second working chamber 22 of the second cylinder 2 has a connection port 25.

The control system has a first control valve 30 and a second control valve 40. In the example shown, the control valves 30 and 40 are electromagnetic 3/2 valves, i.e. two-position control valves with three ports. In principle, it is also possible to use a 4/2 valve, of which in each case one port is not in use.

The control valve 30 has a first port 31, which in the first and second positions of the valve 30 is respectively connected to a second port 32 and a third port 33. Fig. 1 illustrates the first position, in which the port 31 is connected to the second port 32.

The control valve 40 has a first port 41, which in the first and second positions of the valve 40 is respectively connected to a second port 42 and a third port 43. Fig. 1 shows the first position, in which the port 41 is connected to the second port 42.

The two ports 32 and 42 of the valves 30, 40 are connected to one another via a short-circuit line 50. The first and second control valves 30, 40 have a return spring for returning them to the first position of the corresponding valve 30, 40 in an unactuated state of the corresponding valve 30, 40.

The third port 33 of the first control valve 30 is connected, via lines 51, 52, to the connection port 15 of the first working chamber 11 in the first cylinder 1 and, via lines 51, 53, to the connection port 26 of the first working chamber 21 of the second cylinder 2. The first port 31 of the first control valve 30 is connected, via a line 55, to the connection port 27 of the first working chamber 21 of the second cylinder 2 and, via a line 54, to a first port 71 of a switching valve 70, which is to be described in more detail below.

The third port 43 of the second control valve 40 is connected, via lines 56, 57, to the connection port 25 of the second working chamber 22 in the second cylinder 2 and, via lines 56, 58, to the connection port 16 of the second working chamber 12 of the first cylinder 1. The first port 41 of the second control valve 40 is connected, via a line 59, to the connection port 17 of the second working chamber 12 of the first cylinder 1 and, via a line 60, to a second port 72 of the switching valve 70.

The switching valve 70 has two positions and four ports 71-74. As has already been stated above, the lines 54 and 60 are respectively connected to the first port 71 and the second port 72. Furthermore, the switching valve 70 has a pump port 73 and a reservoir port 74. The pump port 73 is connected to the pump P via a pump line 61. The reservoir port 74 is connected to the reservoir T via a reservoir line 62.

In a first position of the switching valve 70, which is illustrated in Fig. 1, the pump port 73 is connected to the first port 71 and the reservoir port 74 is connected to the second port 72, so that the line 54 serves as a feed line in the system and the line 60 serves as a return line. In a second position of the switching valve 70, the pump port 73 is connected to the second port 72 and the reservoir port 74 is connected to the first port 71, so that the line 60 serves as a feed line for the remainder of the system and the line 54 serves as a return line. Therefore, the switching valve 70, as a result of the two positions being adopted, can be used to switch the direction of flow of the hydraulic fluid in the control system.

The switching valve 70 is of what is known as the pressure-controlled type, switching the instant at which the flow of hydraulic fluid in the control system becomes zero, i.e. drops below a defined minimum value.

A safety valve 80, which ensures that the system pressure in the control system cannot exceed a defined value, is arranged between the pump line 61 and the reservoir line 62.

The action of the control system according to the invention will now be explained with reference to Figs. 1-3.

Fig. 1 shows the at-rest state, in which the control valves 30 and 40 are not energized, with the result that the two ports 32 and 42 are connected to one another and the hydraulic oil is pumped via the short-circuit line 50 from the pump side direct to the reservoir side. The control system is therefore unpressurized.

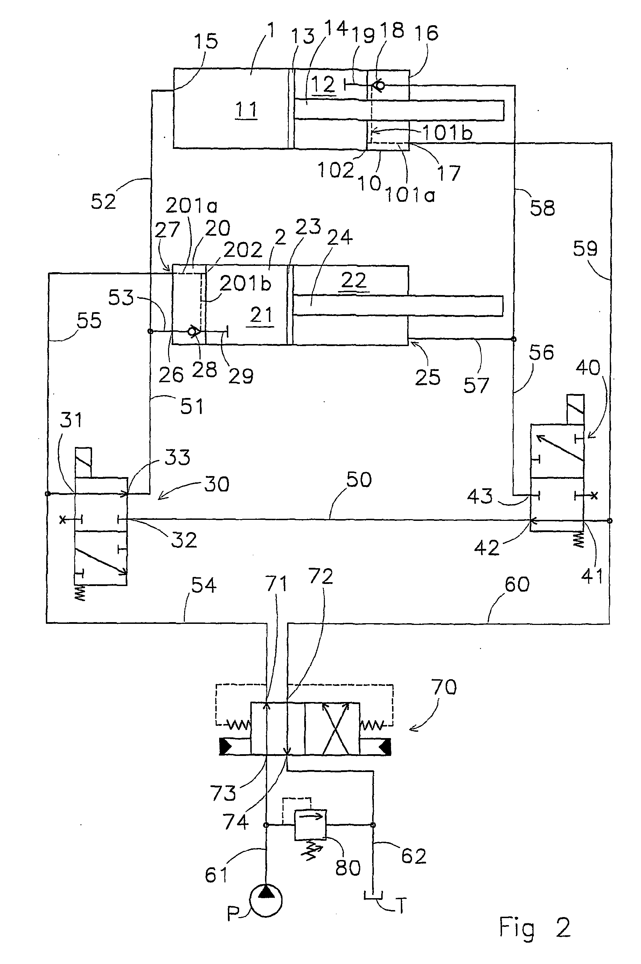

If the control valve 30 is then moved to the second position, as shown in Fig. 2, hydraulic pressure will be applied, via the lines 51, 52, to the first working chamber 11 of the first cylinder 1. The second working chamber 12 of the first cylinder 1 is in open communication with the reservoir T via the port 102, the internal line 101a, the port 17 and the lines 59, 60. As a result, therefore, the hydraulic fluid can flow out of the second working chamber 12 of the first cylinder 1 to the reservoir T. Therefore, a pressure difference is produced between the first working chamber 11 and the second working chamber 12 in the first cylinder 1, with the result that the piston 13 will therefore move to the right, as seen in the figure.

At the same time, via line 55, hydraulic pressure is applied to the first working chamber 21 of the second cylinder 2. However, the hydraulic fluid cannot flow out of the second working chamber 22 of the second cylinder on account of the fact that the hydraulic fluid from port 25 cannot flow away from the second control valve 40 via the lines 57, 56 and the port 43 and on account of the fact that the hydraulic fluid cannot flow away via the lines 57, 58 and the nonreturn valve 18, on account of the fact that the nonreturn valve 18 is closed. The piston 23 of the second cylinder 2 therefore remains stationary.

When the piston 13 of the first cylinder 1 reaches the end of its stroke, with the second working chamber 12 having a volume, the piston 13 will depress the actuating member 19 of the nonreturn valve 18 and open the nonreturn valve 18. As a result, the hydraulic fluid can flow out of the second working chamber 22 of the second cylinder 2, via the lines 57, 58, 101, 59 and 60, to the reservoir T, with the result that the piston 23 of the second cylinder 2 can also move to the right, as seen in the figure.

When the piston 32 of the second cylinder 2 has reached the end of its stroke, the flow of fluid in the control system will become zero. At that moment, the switching valve 70 is automatically switched, with the result that the pump side and reservoir side of the system are reversed. As a result, hydraulic fluid flows via lines 60, 59, 101 into the second working chamber 12 of the first cylinder 1 and onwards via the nonreturn valve 18 and lines 58, 56 to the second working chamber 22 of the second cylinder 2, with the result that the two pistons 13, 23 simultaneously move to the left, as seen in the figure. When the pistons 13 and 23 reach the end of their stroke, the flow of fluid will once again become zero and the switching valve 70 will be switched once again, with the result that the cycle is restarted. At that moment, however, the control valve 30 is switched over, with the result that the control system once again becomes unpressurized and returns to the at-rest state.

The cycle described here is the loading cycle of the conveyor floor according to the invention. The first floor parts 301 are moved under the load by means of the first cylinder 1. Then, the second floor parts 302 are moved under the load by means of the second cylinder 2. Finally, the first and second floor parts 301, 302, together with the load, are simultaneously moved back, so that the load is moved, for example, into a loading space of a lorry or the like.

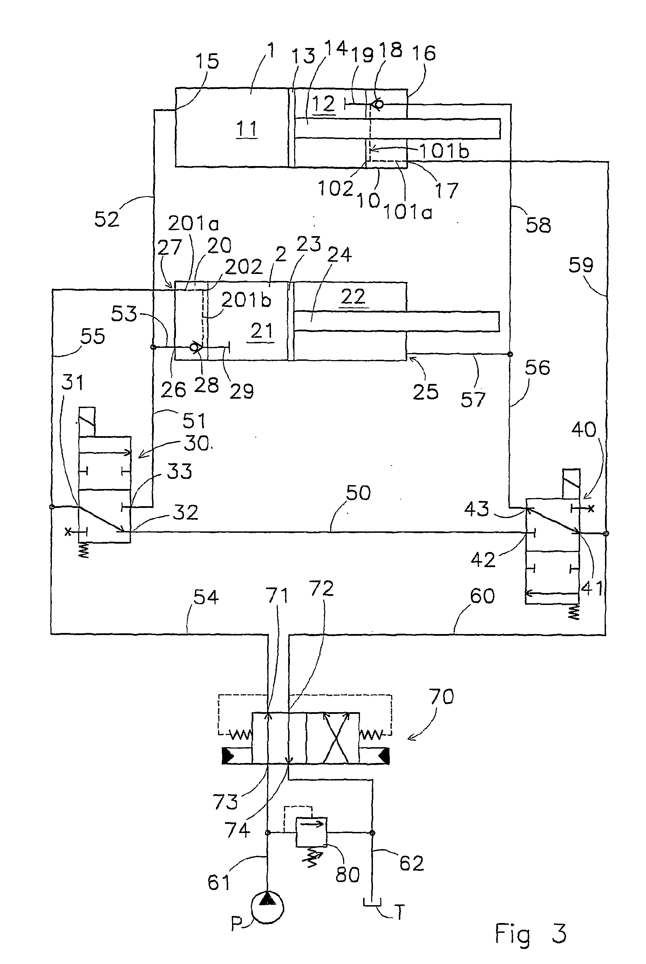

In addition to the loading cycle there is also an unloading cycle, in which the first and second floor parts 301, 302 together with the load are displaced simultaneously in such a way that the load is moved, for example, out of a loading space of a lorry or the like. Then, the second cylinder 2 is used to pull the second floor parts 302 out from beneath the load. Then, the first cylinder 1 is used to pull the first floor parts 301 out from beneath the load. This takes place in the following way:
In the unloading cycle, the second control valve 40 is switched over into the second position, as shown in Fig. 3. As a result, the short-circuit line 50 is closed and a hydraulic pressure is applied, via the lines 55 and 201a, to the first working chambers 21 of the second cylinder 2 and, furthermore, via the internal line 201b, the lines 53 and 52, to the first working chamber 11 of the first cylinder 1.

The second working chambers 12 and 22 of the first and second cylinders 1, 2 are both in open communication with the reservoir T. Therefore, in both cylinders 1 and 2 there is a pressure difference across the pistons 13 and 23, with the result that they will simultaneously move to the right, as seen in the figure. When they have reached the end of their stroke, the flow of fluid becomes zero and the switching valve 70 is automatically switched over. Now, in the first instance, only the hydraulic fluid out of the first working chamber 21 can flow from the second cylinder 2 to the reservoir T via the lines 55, 54, 62. Therefore, only the piston 23 of the second cylinder 2 will move to the left, as seen in the figure. At the end of the stroke, the piston 23 of the second cylinder 2 will open the nonreturn valve 28 via the actuator member 29, with the result that the hydraulic fluid will flow out of the first working chamber 11 of the first cylinder 1, via the lines 52, 53, 201, 55 etc., to the reservoir T with the result that the piston 13 of the first cylinder 1 will move to the left, as seen in the figure. When the piston 13 reaches the end of its stroke, the flow in the system once again becomes zero and the switching valve 70 is once again switched over automatically. At that moment, the second control valve 40 is also switched over, with the result that the system returns once again to the at-rest state.

Hitherto, the invention has been explained on the basis of a conveyor floor with two actuators. However, it will be clear that the invention also relates to conveyor floors with more than two actuators.

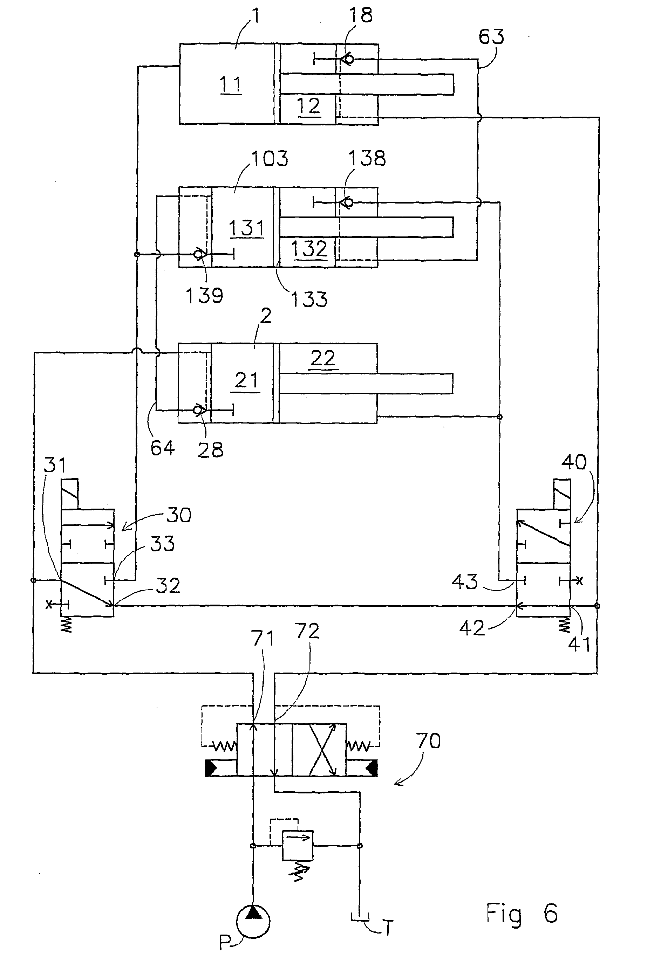

Fig. 6 shows the control system of an embodiment of a conveyor floor with three slideable floor parts, which are connected to three actuators. The embodiment shown in Fig. 6 largely operates in the same way as that shown in Fig. 1. Therefore, identical components are denoted by identical reference numerals. In the example shown, one intervening cylinder 103 is arranged between the first and second cylinders 1 and 2, respectively.

The third port 33 of the first control valve 30 is connected to the first working chamber 11 of the first cylinder 1 and to a first working chamber 131 of the intervening cylinder 103.

The third port 43 of the second control valve 40 is connected to the second working chamber 22 of the first cylinder 2 and to a second working chamber 132 of the intervening cylinder 103.

The second working chamber 12 of the first cylinder 1 is connected to the second working chamber 132 of the following intervening cylinder 103 via a line 63.

The first working chamber 21 of the second cylinder 2 is connected to the first working chamber 131 of the preceding intervening cylinder 103 via a line 64.

An actuable nonreturn valve 18, which can be actuated by the piston 13 of the first cylinder 1 in that position of the piston 13 in which the volume of the second working chamber 12 of the first cylinder 1 is at a minimum, is arranged between the second working chamber 12 of the first cylinder 1 and the second working chamber 132 of the intervening cylinder 103.

An actuable nonreturn valve 138, which can be actuated by the piston 133 of the intervening cylinder 103 in that position of the piston 133 in which the volume of the second working chamber 132 of the intervening cylinder 103 is at a minimum, is arranged between the second working chamber 132 of the intervening cylinder 103 and the third port 43 of the second control valve 40.

An actuable nonreturn valve 28, which can be actuated by the piston 23 of the second cylinder 2 in that position of the piston 23 in which the volume of the first working chamber 21 of the second cylinder 2 is at a minimum, is arranged between the first working chamber 21 of the second cylinder 2 and the first working chamber 131 of the intervening cylinder 103.

An actuable nonreturn valve 139, which can be actuated by the piston 133 of the intervening cylinder 103 in that position of the piston 133 in which the volume of the first working chamber 131 of the intervening cylinder 103 is at a minimum, is arranged between the first working chamber 131 of the intervening cylinder 103 and the third port 33 of the first control valve 30.

It should be noted that an embodiment with more than one intervening actuator is constructed analogously, with the first working chambers of all the intervening actuators being connected to the third port 33 of the first control valve 30 and with the second working chambers of all the intervening actuators being connected to the third port 43 of the second control valve 40. Furthermore, the second working chamber 12 of the first actuator 1 is connected to the second working chamber of one of the intervening actuators, and the first working chamber 21 of the second actuator 2 is connected to the first working chamber of one of the intervening actuators.

In the embodiments described, the control valves 30 and 40 are electromagnetic control valves. However, it is also possible for the valves to be designed as manually actuated, pneumatically actuated or pressure-controlled control valves.

## Claims

1. Conveyor floor comprising at least first and second floor parts (301, 302), which are positioned next to one another and can slide to and fro in the longitudinal direction, and a hydraulic control system for controlling the slideable floor parts (301, 302), which hydraulic control system comprises:
- a pump (P),
- a reservoir (T),
- a first and a second hydraulic actuator (1, 2), which are coupled to the first and second floor parts, respectively (301 and 302, respectively) in order to slide the floor parts (301, 302) to and fro, the first and second actuators (1, 2) being of the double-acting type and each having a first and a second variable working chamber (11, 21; 21, 22), which are delimited by a piston (13, 23) of the corresponding actuator (1, 2),
- a first control valve (30) and a second control valve (40), which first control valve (30) has a first port (31), a second port (32) and a third port (33), wherein in a first position of the first control valve (30) the first port (31) is connected to the second port (32) and in a second position the first port (31) is connected to the third port (33), and which second control valve (40) has a first port (41), a second port (42) and a third port (43), wherein in a first position of the second control valve (40) the first port (41) is connected to the second port (42) and in a second position the first port (41) is connected to the third port (43),
- a switching valve (70) having a first port (71), a second port (72), a pump port (73) and a reservoir port (74), which pump port (73) is connected to the pump (P) and which reservoir port (74) is connected to the reservoir (T), wherein in a first position of the switching valve (70) the pump port (73) is connected to the first port (71) and the reservoir port (74) is connected to the second port (72), and in a second position the pump port (73) is connected to the second port (72) and the reservoir port (74) is connected to the first port (71),
the switching valve (70), the first and second control valves (30, 40) and the hydraulic actuator (1, 2) being connected as follows:
the first port (71) of the switching valve (70) is connected to the first port (31) of the first control valve (30) and to the first working chamber (21) of the second actuator (2),
the second port (72) of the switching valve (70) is connected to the first port (41) of the second control valve (40) and to the second working chamber (12) of the first actuator (1),
the second port (32) of the first control valve (30) is connected to the second port (42) of the second control valve (40),
the third port (33) of the first control valve (30) is connected to the first working chamber (11) of the first actuator (1) and to the first working chamber (21) of the second actuator (2),
the third port (43) of the second control valve (40) is connected to the second working chamber (12) of the first actuator (1) and to the second working chamber (22) of the second actuator (2),
an actuable nonreturn valve (18), which can be actuated by the piston (13) of the first actuator (1) in that position of the piston (13) in which the volume of the second working chamber (12) of the first actuator (1) is at a minimum, being arranged between the second working chamber (12) of the first actuator (1) and the third port (43) of the second control valve (40), and an actuable nonreturn valve (28), which can be actuated by the piston (23) of the second actuator (2) in that position of the piston (23) in which the volume of the first working chamber (21) of the second actuator (2) is at a minimum, being arranged between the first working chamber (21) of the second actuator (2) and the third port (33) of the first control valve (30),
**characterized in that** the switching valve (70) is a pressure-controlled switching valve which switches from the first position to the second position or from the second position to the first position when the flow of hydraulic fluid in the control system is zero.

2. Conveyor floor comprising at least three floor parts, which are located next to one another and can slide to and fro in the longitudinal direction, and a hydraulic control system for controlling the slideable floor parts, which hydraulic control system comprises:
- a pump (P),
- a reservoir (T),
- a first hydraulic actuator (1), a second hydraulic actuator (2) and one or more intervening hydraulic actuators (103) which are coupled to the floor parts in order to slide the floor parts to and fro, the actuators (1, 2, 103) being of the double-acting type and each having a first and a second variable working chamber (11, 21, 131; 21, 22, 132) which are delimited by a piston (13, 23, 133) of the corresponding actuator (1, 2, 103),
- a first control valve (30) and a second control valve (40), which first control valve (30) has a first port (31), a second port (32) and a third port (33), wherein in a first position of the first control valve (30) the first port (31) is connected to the second port (32) and in a second position the first port (31) is connected to the third port (33), and which second control valve (40) has a first port (41), a second port (42) and a third port (43), wherein in a first position of the second control valve (40) the first port (41) is connected to the second port (42) and in a second position the first port (41) is connected to the third port (43),
- a switching valve (70) having a first port (71), a second port (72), a pump port (73) and a reservoir port (74), which pump port (73) is connected to the pump (P) and which reservoir port (74) is connected to the reservoir (T), wherein in a first position of the switching valve (70) the pump port (73) is connected to the first port (71) and the reservoir port (74) is connected to the second port (72), and in a second position the pump port (73) is connected to the second port (72) and the reservoir port (74) is connected to the first port (71),
the switching valve (70), the first and second control valves (30, 40) and the hydraulic actuators (1, 2, 103) being connected as follows:
the first port (71) of the switching valve (70) is connected to the first port (31) of the first control valve (30) and to the first working chamber (21) of the second actuator (2),
the second port (72) of the switching valve (70) is connected to the first port (41) of the second control valve (40) and to the second working chamber (12) of the first actuator (1),
the second port (32) of the first control valve (30) is connected to the second port (42) of the second control valve (40),
the third port (33) of the first control valve (30) is connected to the first working chamber (11) of the first actuator (1) and to the first working chamber (131) of the one or more intervening actuators (103),
the third port (43) of the second control valve (40) is connected to the second working chamber (22) of the second actuator (2) and to the second working chamber (132) of the one or more intervening actuators (103),
the second working chamber (12) of the first actuator (1) is connected to the second working chamber (132) of one of the one or more intervening actuators (103),
the first working chamber (21) of the second actuator (2) is connected to the first working chamber (131) of one of the one or more intervening actuators (103),
an actuable nonreturn valve (18), which can be actuated by the piston (13) of the first actuator (1) in that position of the piston (13) in which the volume of the second working chamber (12) of the first actuator (1) is at a minimum, being arranged between the second working chamber (12) of the first actuator (1) and the second working chamber (132) of the corresponding intervening actuator (103),
in each case an actuable nonreturn valve (138), which can be actuated by the piston (133) of the intervening actuator (103) in that position of the piston (133) in which the volume of the second working chamber (132) of the intervening actuator (103) is at a minimum, being arranged between the second working chamber (132) of the one or more intervening actuators (103) and the third port (43) of the second control valve (40),
an actuable nonreturn valve (28), which can be actuated by the piston (23) of the second actuator (2) in that position of the piston (23) in which the volume of the first working chamber (21) of the second actuator (2) is at a minimum, being arranged between the first working chamber (21) of the second actuator (2) and the first working chamber (131) of the corresponding intervening actuator (103),
in each case an actuable nonreturn valve (139), which can be actuated by the piston (133) of the intervening actuator (103) in that position of the piston (133) in which the volume of the first working chamber (131) of the intervening actuator (103) is at a minimum, being arranged between the first working chamber (131) of the one or more intervening actuators (103) and the third port (33) of the first control valve (30),
**characterized in that** the switching valve (70) is a pressure-controlled switching valve which switches from the first position to the second position or from the second position to the first position when the flow of hydraulic fluid in the control system is zero.

3. Conveyor floor according to claim 1 or 2, in which the first and second control valves (30, 40) are electromagnetically actuable valves.

4. Conveyor floor according to claim 3, in which the first and second control valves have a return spring for returning the corresponding valve (30, 40) to its first position in the unactuated state of the corresponding valve (30, 40).

5. Conveyor floor according to claim 1 or 2, in which the first and second control valves (30, 40) are pneumatically actuable valves.

6. Conveyor floor according to claim 1 or 2, in which the first and second control valves (30, 40) are pressure-controlled valves.

## Patentansprüche

1. Flurförderer mit wenigstens ersten und zweiten Flurteilen (301, 302), welche nebeneinander angeordnet sind und in der Längsrichtung hin- und hergleiten können, und mit einem hydraulischen Steuersystem zur Steuerung der verschiebbaren Flurteile (301, 302), wobei das hydraulische Steuersystem aufweist:
- eine Pumpe (P),
- einen Behälter (T),
- einen ersten und einen zweiten hydraulischen Aktuator (1, 2), welche jeweils an die ersten und zweiten Flurteile gekoppelt sind (301 bzw. 302), um die Flurteile (301, 302) hin- und herzuschieben, wobei die ersten und zweiten Aktuatoren (1, 2) vom zweifach wirkenden Typ sind und wobei jeder eine erste und eine zweite variable Arbeitskammer (11, 21; 21, 22) hat, welche durch einen Kolben (13, 23) des entsprechenden Aktuators (1, 2) begrenzt sind,
- ein erstes Steuerventil (30) und ein zweites Steuerventil (40) wobei das erste Steuerventil (30) einen ersten Eingang (31), einen zweiten Eingang (32) und einen dritten Eingang (33) hat, wobei in einer ersten Position des ersten Steuerventils (30) der erste Eingang (31) mit dem zweiten Eingang (32) verbunden ist, und wobei in einer zweiten Position der erste Eingang (31) mit dem dritten Eingang (33) verbunden ist, und wobei das zweite Steuerventil (40) einen ersten Eingang (41), einen zweiten Eingang (42) und einen dritten Eingang (43) hat, wobei in einer ersten Position des zweiten Steuerventils (40) der erste Eingang (41) mit dem zweiten Eingang (42) verbunden ist und wobei in einer zweiten Position der erste Eingang (41) mit dem dritten Eingang (43) verbunden ist,
- ein Umschaltventil (70) mit einem ersten Eingang (71), einem zweiten Eingang (72), einem Pumpeneingang (73) und einem Behältereingang (74), wobei der Pumpeneingang (73) mit der Pumpe (P) verbunden ist und wobei der Behältereingang (74) mit dem Behälter (T) verbunden ist, wobei in einer ersten Position des Umschaltventils (70) der Pumpeneingang (73) mit dem ersten Eingang (71) verbunden ist und der Behältereingang (74) verbunden ist mit dem zweiten Eingang (72), und wobei in einer zweiten Position der Pumpeneingang (73) mit dem zweiten Eingang (72) verbunden ist und der Behältereingang (74) mit dem ersten Eingang (71) verbunden ist,
wobei das Umschaltventil (70), das erste und das zweite Steuerventil (30, 40) und der hydraulische Aktuator (1, 2) wie folgt verbunden sind:
der erste Eingang (71) des Umschaltventils (70) ist mit dem ersten Eingang (31) des ersten Steuerventils (30) und mit der ersten Arbeitskammer (21) des zweiten Aktuators (2) verbunden,
der zweite Eingang (72) des Umschaltventils (70) ist mit dem ersten Eingang (41) des zweiten Steuerventils (40) und mit der zweiten Arbeitskammer (12) des ersten Aktuators (1) verbunden,
der zweite Eingang (32) des ersten Steuerventils (30) ist mit dem zweiten Eingang (42) des zweiten Steuerventils (40) verbunden,
der dritte Eingang (33) des ersten Steuerventils (30) ist mit der ersten Arbeitskammer (11) des ersten Aktuators (1) und mit der ersten Arbeitskammer (21) des zweiten Aktuators (2) verbunden,
der dritte Eingang (43) des zweiten Steuerventils (40) ist mit der zweiten Arbeitskammer (12) des ersten Aktuators (1) und mit der zweiten Arbeitskammer (22) des zweiten Aktuators (2) verbunden,
mit einem betätigbaren Rückschlagventil (18), das durch den Kolben (13) des ersten Aktuators (1) in der Position des Kolbens (13) betätigt werden kann, in welcher das Volumen der zweiten Arbeitskammer (12) des ersten Aktuators (1) bei einem Minimum liegt, wobei dieses zwischen der zweiten Arbeitskammer (12) des ersten Aktuators (1) und dem dritten Eingang (43) des zweiten Steuerventils (40) angeordnet ist, und mit einem betätigbaren Rückschlagventil (28), das durch den Kolben (23) des zweiten Aktuators (2) in der Position des Kolbens (23), in welcher das Volumen der ersten Arbeitskammer (21) des zweiten Aktuators (2) bei einem Minimum liegt, betätigt werden kann, wobei es zwischen der ersten Arbeitskammer (21) des zweiten Aktuators (2) und dem dritten Eingang (33) des ersten Steuerventils (30) angeordnet ist,
**dadurch gekennzeichnet, dass** das Umschaltventil (70) ein druckgesteuertes Umschaltventil ist, das von der ersten Position auf die zweiten Position oder von der zweiten Position auf die erste Position umschaltet, wenn der Fluss der hydraulischen Flüssigkeit in dem Steuersystem Null ist.

2. Flurförderer mit wenigstens drei Flurteilen, die nebeneinander angeordnet sind und die in Längsrichtung hin- und hergleiten können, und einem hydraulischen Steuersystem zur Steuerung der verschiebbaren Flurteile, wobei das hydraulische Steuersystem aufweist:
- eine Pumpe (P),
- einen Behälter (T),
- einen ersten hydraulischen Aktuator (1), einen zweiten hydraulischen Aktuator (2) und einen oder mehrere zwischengeschaltete hydraulische Aktuatoren (103), die an die Flurteile gekoppelt sind, um die Flurteile hin- und herzuschieben, wobei die Aktuatoren (1, 2, 103) vom zweifach wirkenden Typ sind, und wobei jeder davon eine erste und eine zweite variable Arbeitskammer (11, 21, 131; 21, 22, 132) aufweist, die durch einen Kolben (13, 23, 133) des entsprechenden Aktuators (1, 2, 103) begrenzt sind,
- ein erstes Steuerventil (30) und ein zweites Steuerventil (40), wobei das erste Steuerventil (30) einen ersten Eingang (31), einen zweiten Eingang (32) und einen dritten Eingang (33) hat, wobei in einer ersten Position des ersten Steuerventils (30) der erste Eingang (31) mit dem zweiten Eingang (32) verbunden ist, und wobei in einer zweiten Position der erste Eingang (31) mit dem dritten Eingang (33) verbunden ist, und wobei das zweite Steuerventil (40) einen ersten Eingang (41), einen zweiten Eingang (42) und einen dritten Eingang (43) hat, wobei in einer ersten Position des zweiten Steuerventils (40) der erste Eingang (41) mit dem zweiten Eingang (42) verbunden ist, und wobei in einer zweiten Position der erste Eingang (41) mit dem dritten Eingang (43) verbunden ist,
- ein Umschaltventil (70) mit einem ersten Eingang (71), einem zweiten Eingang (72), einem Pumpeneingang (73) und einem Behältereingang (74), wobei der Pumpeneingang (73) mit der Pumpe (P) verbunden ist und wobei der Behältereingang (74) mit dem Behälter (T) verbunden ist, wobei in einer ersten Position des Umschaltventils (70) der Pumpeneingang (73) mit dem ersten Eingang (71) verbunden ist und wobei der Behältereingang (74) mit dem zweiten Eingang (72) verbunden ist, und wobei in einer zweiten Position der Pumpeneingang (73) mit dem zweiten Eingang (72) verbunden ist und der Behältereingang (74) mit dem ersten Eingang (71) verbunden ist,
wobei das Umschaltventil (70), das erste und das zweite Steuerventil (30, 40) und die hydraulischen Aktuatoren (1, 2, 103) wie folgt verbunden sind:
der erste Eingang (71) des Umschaltventils (70) ist mit dem ersten Eingang (31) des ersten Steuerventils (30) und mit der ersten Arbeitskammer (21) des zweiten Aktuators (2) verbunden,
der zweite Eingang (72) des Umschaltventils (70) ist mit dem ersten Eingang (41) des zweiten Steuerventils (40) und mit der zweiten Arbeitskammer (12) des ersten Aktuators (1) verbunden,
der zweite Eingang (32) des ersten Steuerventils (30) ist mit dem zweiten Eingang (42) des zweiten Steuerventils (40) verbunden,
der dritte Eingang (33) des ersten Steuerventils (30) ist mit der ersten Arbeitskammer (11) des ersten Aktuators (1) und mit der ersten Arbeitskammer (131) der einen oder mehreren zwischengeschalteten Aktuatoren (103) verbunden,
der dritte Eingang (43) des zweiten Steuerventils (40) ist mit der zweiten Arbeitskammer (22) des zweiten Aktuators (2) und mit der zweiten Arbeitskammer (132) des einen oder der mehreren zwischengeschalteten Aktuatoren (103) verbunden,
die zweite Arbeitskammer (12) des ersten Aktuators (1) ist mit der zweiten Arbeitskammer (132) eines des einen oder der mehreren zwischengeschalteten Aktuatoren (103) verbunden,
die erste Arbeitskammer (21) des zweiten Aktuators (2) ist mit der ersten Arbeitskammer (131) eines des einen oder der mehreren zwischengeschalteten Aktuatoren (103) verbunden,
mit einem betätigbaren Rückschlagventil (18), welches durch den Kolben (13) des ersten Aktuators (1) in der Position des Kolbens (13), in welcher das Volumen der zweiten Arbeitskammer (12) des ersten Aktuators (1) bei einem Minimum liegt, betätigt werden kann, wobei es zwischen der zweiten Arbeitskammer (12) des ersten Aktuators (1) und der zweiten Arbeitskammer (132) des entsprechenden zwischengeschalteten Aktuators (103) angeordnet ist,
in jedem Fall mit einem betätigbaren Rückschlagventil (138), welches durch den Kolben (133) des zwischengeschalteten Aktuators (103) in der Position des Kolbens (133), in welcher das Volumen der zweiten Arbeitskammer (132) des zwischengeschalteten Aktuators (103) bei einem Minimum liegt, betätigt werden kann, wobei es zwischen der zweiten Arbeitskammer (132) des einen oder der mehreren zwischengeschalteten Aktuatoren (103) und dem dritten Eingang (43) des zweiten Steuerventils (40) angeordnet ist,
mit einem betätigbaren Rückschlagventil (28), das durch den Kolben (23) des zweiten Aktuators (2) in der Position des Kolbens (23), in welcher das Volumen der ersten Arbeitskammer (21) des zweiten Aktuators (2) bei einem Minimum liegt, betätigt werden kann, wobei es zwischen der ersten Arbeitskammer (21) des zweiten Aktuators (2) und der ersten Arbeitskammer (131) des entsprechenden zwischengeschalteten Aktuars (103) angeordnet ist,
in jedem Fall mit einem betätigbaren Rückschlagventil (139), welches durch den Kolben (133) des zwischengeschalteten Aktuators (103) in der Position des Kolbens (133), in welcher das Volumen der ersten Arbeitskammer (133) des zwischengeschalteten Aktuators (103) bei einem Minimum liegt, betätigt werden kann, wobei es zwischen der ersten Arbeitskammer (131) des einen oder der mehreren zwischengeschalteten Aktuatoren (103) und dem dritten Eingang (33) des ersten Steuerventils (30) angeordnet ist,
**dadurch gekennzeichnet, dass** das Umschaltventil (70) ein druckgesteuertes Umschaltventil ist, welches von der ersten Position auf die zweite Position oder von der zweiten Position auf die erste Position umschaltet, wenn der Fluss der hydraulischen Flüssigkeit in dem Steuersystem Null ist.

3. Flurförderer gemäß Anspruch 1 oder 2, bei dem das erste und das zweite Steuerventil (30, 40) elektromagnetisch betätigbare Ventile sind.

4. Flurförderer gemäß Anspruch 3, bei dem das erste und das zweite Steuerventil eine Rückholfeder haben, um das entsprechende Ventil (30, 40) in seine erste Position im unbetätigten Zustand des entsprechenden Ventils (30, 40) zurückzuholen.

5. Flurförderer gemäß Anspruch 1 oder 2, bei dem das erste und das zweite Steuerventil (30, 40) pneumatisch betätigbare Ventile sind.

6. Flurförderer gemäß Anspruch 1 oder 2, bei dem das erste und das zweite Steuerventil (30, 40) druckgesteuerte Ventile sind.

## Revendications

1. Plancher de transporteur comprenant au moins un premier et un deuxième éléments de plancher (301, 302), qui sont placés l'un près de l'autre et peuvent coulisser en va-et-vient dans la direction longitudinale, et un système de commande hydraulique pour commander les éléments de plancher coulissants (301, 302), ce système de commande hydraulique comprenant :
- une pompe (P),
- un réservoir (T),
- un premier et un deuxième actionneurs hydrauliques (1, 2), qui sont couplés aux premier et deuxième éléments de plancher, respectivement (301 et 302, respectivement) afin de faire coulisser les éléments de plancher (301, 302) en va-et-vient, les premier et deuxième actionneurs (1, 2) étant du type à double effet et ayant chacun une première et une deuxième chambres de travail variables (1 1 , 21 ; 21 , 22) qui sont délimitées par un piston (13, 23) de l'actionneur correspondant (1, 2),
- une première vanne de commande (30) et une deuxième vanne de commande (40), cette première vanne de commande (30) ayant un premier orifice (31), un deuxième orifice (32) et un troisième orifice (33) de sorte que, dans une première position de la première vanne de commande (30), le premier orifice (31) est connecté au deuxième orifice (32) et, dans une deuxième position, le premier orifice (31) est connecté au troisième orifice (33), et la deuxième vanne de commande (40) comprend un premier orifice (41), un deuxième orifice (42) et un troisième orifice (43) de sorte que, dans une première position de la deuxième vanne de commande (40), le premier orifice (41) est connecté au deuxième orifice (42) et, dans une deuxième position, le premier orifice (41) est connecté au troisième orifice (43),
- une vanne de commutation (70) ayant un premier orifice (71), un deuxième orifice (72), un orifice de pompe (73) et un orifice de réservoir (74), le dit orifice de pompe (73) étant connecté à la pompe (P) et le dit orifice de réservoir (74) étant connecté au réservoir (T) de sorte que, dans une première position de la vanne de commutation (70), l'orifice de pompe (73) est connecté au premier orifice (71) et l'orifice de réservoir (74) est connecté au deuxième orifice (72) et, dans une deuxième position, l'orifice de pompe (73) est connecté au deuxième orifice (72) et l'orifice de réservoir (74) est connecté au premier orifice (71),
la vanne de commutation (70), les première et deuxième vannes de commande (30, 40) et l'actionneur hydraulique (1, 2) étant connectés comme suit :
le premier orifice (71) de la vanne de commutation (70) est connecté au premier orifice (31) de la première vanne de commande (30) et à la première chambre de travail (21) du deuxième actionneur (2),
le deuxième orifice (72) de la vanne de commutation (70) est connecté au premier orifice (41) de la deuxième vanne de commande (40) et à la deuxième chambre de travail (12) du premier actionneur (1),
le deuxième orifice (32) de la première vanne de commande (30) est connecté au deuxième orifice (42) de la deuxième vanne de commande (40),
le troisième orifice (33) de la première vanne de commande (30) est connecté à la première chambre de travail (11) du premier actionneur (1) et à la première chambre de travail (21) du deuxième actionneur (2),
le troisième orifice (43) de la deuxième vanne de commande (40) est connecté à la deuxième chambre de travail (12) du premier actionneur (1) et à la deuxième chambre de travail (22) du deuxième actionneur (2),
un clapet de non retour actionnable (18), qui peut être actionné par le piston (13) du premier actionneur (1) dans la position du piston (13) dans laquelle le volume de la deuxième chambre de travail (12) du premier actionneur (1) est minimal, étant agencé entre la deuxième chambre de travail (12) du premier actionneur (1) et le troisième orifice (43) de la deuxième vanne de commande (40), et un clapet de non retour actionnable (28), qui peut être actionné par le piston (23) du deuxième actionneur (2) dans la position du piston (23) dans laquelle le volume de la première chambre de travail (21) du deuxième actionneur (2) est minimal, étant agencé entre la première chambre de travail (21) du deuxième actionneur (2) et le troisième orifice (33) de la première vanne de commande (30),
**caractérisé en ce que** la vanne de commutation (70) est une vanne de commutation à commande par pression qui passe de la première position à la deuxième position ou de la deuxième position à la première position lorsque le débit de fluide hydraulique dans le système de commande est nul.

2. Plancher de convoyeur comprenant au moins trois éléments de plancher qui sont situés les uns près des autres et peuvent coulisser en va-et-vient dans la direction longitudinale, et un système de commande hydraulique pour commander les éléments de plancher coulissants, ce système de commande hydraulique comprenant :
- une pompe (P),
- un réservoir (T),
- un premier actionneur hydraulique (1), un deuxième actionneur hydraulique (2) et un ou plusieurs actionneurs hydrauliques intermédiaires (103) qui sont couplés aux éléments de plancher afin de faire coulisser les éléments de plancher en va-et-vient, les actionneurs (1, 2, 103) étant du type à double effet et ayant chacun une première et une deuxième chambres de travail variables (11, 21, 131 ; 21, 22, 132) qui sont délimitées par un piston (13, 23, 133) de l'actionneur correspondant (1, 2, 103),
- une première vanne de commande (30) et une deuxième vanne de commande (40), cette première vanne de commande (30) ayant un premier orifice (31), un deuxième orifice (32) et un troisième orifice (33) de sorte que, dans une première position de la première vanne de commande (30), le premier orifice (31) est connecté au deuxième orifice (32) et, dans une deuxième position, le premier orifice (31) est connecté au troisième orifice (33), et la deuxième vanne de commande (40) comprend un premier orifice (41), un deuxième orifice (42) et un troisième orifice (43) de sorte que, dans une première position de la deuxième vanne de commande (40), le premier orifice (41) est connecté au deuxième orifice (42) et, dans une deuxième position, le premier orifice (41) est connecté au troisième orifice (43),
- une vanne de commutation (70) ayant un premier orifice (71), un deuxième orifice (72), un orifice de pompe (73) et un orifice de réservoir (74), le dit orifice de pompe (73) étant connecté à la pompe (P) et le dit orifice de réservoir (74) étant connecté au réservoir (T) de sorte que, dans une première position de la vanne de commutation (70), l'orifice de pompe (73) est connecté au premier orifice (71) et l'orifice de réservoir (74) est connecté au deuxième orifice (72) et, dans une deuxième position, l'orifice de pompe (73) est connecté au deuxième orifice (72) et l'orifice de réservoir (74) est connecté au premier orifice (71),
la vanne de commutation (70), les première et deuxième vannes de commande (30, 40) et les actionneurs hydrauliques (1, 2, 103) étant connectés comme suit :
le premier orifice (71) de la vanne de commutation (70) est connecté au premier orifice (31) de la première vanne de commande (30) et à la première chambre de travail (21) du deuxième actionneur (2),
le deuxième orifice (72) de la vanne de commutation (70) est connecté au premier orifice (41) de la deuxième vanne de commande (40) et à la deuxième chambre de travail (12) du premier actionneur (1),
le deuxième orifice (32) de la première vanne de commande (30) est connecté au deuxième orifice (42) de la deuxième vanne de commande (40),
le troisième orifice (33) de la première vanne de commande (30) est connecté à la première chambre de travail (11) du premier actionneur (1) et à la première chambre de travail (131) des dits un ou plusieurs actionneurs intermédiaires (103),
le troisième orifice (43) de la deuxième vanne de commande (40) est connecté à la deuxième chambre de travail (22) du deuxième actionneur (2) et à la deuxième chambre de travail (132) des dits un ou plusieurs actionneurs intermédiaires (103),
la deuxième chambre de travail (12) du premier actionneur (1) est connectée à la deuxième chambre de travail (132) d'un des dits un ou plusieurs actionneurs intermédiaires (103),
la première chambre de travail (21) du deuxième actionneur (2) est connectée à la première chambre de travail (131) d'un des dits un ou plusieurs actionneurs intermédiaires (103),
un clapet de non retour actionnable (18), qui peut être actionné par le piston (13) du premier actionneur (1) dans la position du piston (13) dans laquelle le volume de la deuxième chambre de travail (12) du premier actionneur (1) est minimal, étant agencé entre la deuxième chambre de travail (12) du premier actionneur (1) et la deuxième chambre de travail (132) de l'actionneur intermédiaire correspondant (103),
dans chaque cas, un clapet de non retour actionnable (138), qui peut être actionné par le piston (133) de l'actionneur intermédiaire (103) dans la position du piston 133) dans laquelle le volume de la deuxième chambre de travail (132) de l'actionneur intermédiaire (103) est minimal, étant agencé entre la deuxième chambre de travail (132) des dits un ou plusieurs actionneurs intermédiaires (103) et le troisième orifice (43) de la deuxième vanne de commande (40),
un clapet de non retour actionnable (28), qui peut être actionné par le piston (23) du deuxième actionneur (2) dans la position du piston (23) dans laquelle le volume de la première chambre de travail (21) du deuxième actionneur (2) est minimal, étant agencé entre la première chambre de travail (21) du deuxième actionneur (2) et la première chambre de travail (131) de l'actionneur intermédiaire correspondant (103),
dans chaque cas, un clapet de non retour actionnable (139), qui peut être actionné par le piston (133) de l'actionneur intermédiaire (103) dans la position du piston (133) dans laquelle le volume de la première chambre de travail (131) de l'actionneur intermédiaire (103) est minimal, étant agencé entre la première chambre de travail (131) des dits un ou plusieurs actionneurs intermédiaires (103) et le troisième orifice (33) de la première vanne de commande (30), **caractérisé en ce que** la vanne de commutation (70) est une vanne de commutation à commande par pression qui passe de la première position à la deuxième position ou de la deuxième position à la première position lorsque le débit de fluide hydraulique dans le système de commande est nul.

3. Plancher de transporteur selon la revendication 1 ou 2, dans lequel les première et deuxième vannes de commande (30, 40) sont des vannes à commande électromagnétique.

4. Plancher de transporteur selon la revendication 3, dans lequel les première et deuxième vannes de commande ont un ressort de rappel pour ramener la vanne correspondante (30, 40) à sa première position dans l'état non actionné de la vanne correspondante (30, 40).

5. Plancher de transporteur selon la revendication 1 ou 2, dans lequel les première et deuxième vannes de commande (30, 40) sont des vannes à commande pneumatique.

6. Plancher de transporteur selon la revendication 1 ou 2, dans lequel les première et deuxième vannes de commande (30, 40) sont des vannes à commande par pression.
